# EUROPEAN PATENT APPLICATION

(11) **EP 1 067 729 A2**
(43) Date of publication of application: **10.01.2001**
(21) Application number: 00114556.4
(22) Date of filing: 06.07.2000
(51) Int. Cl.: H04L 1/00

(54) **Data transfer control system for mobile packet communications**

(30) Priority: 09.07.1999 JP 19532299
(71) Applicant: NEC CORPORATION, Tokyo (JP)
(72) Inventor: Samamoto, Yoshifumi, c/o NEC Corporation, Tokyo (JP)
(74) Representative: Glawe, Delfs, Moll & Partner

(57) **Abstract**

In a data transfer control system in mobile data communications system, when the data transfer from a mobile terminal to a base station system starts, the transfer rate is controlled to increase sequentially from a low transfer rate to be set initially. The mobile data communications system with a channel structure where the rate of data transfer can be varied has: a mobile terminal which is connected to a terminal equipment and whose transfer rate is controlled to increase sequentially from a low transfer rate to be set initially when the data transfer from the terminal equipment to a base station system starts; and the base station system for sending control information for controlling the transfer rate of the mobile terminal to the mobile terminal based on the quality of receive signal.

## Description

### FIELD OF THE INVENTION

This invention relates to a data transfer control system in mobile packet data communications.

### BACKGROUND OF THE INVENTION

When packet communications are introduced into a mobile communication system using a CDMA (code division multiple access) communications system where a diffusion code in spread spectrum system in wide-band frequency is assigned to each communication, it is necessary to take the traffic characteristic of packet communication into account. A packet data in mobile communication system is radio-transmitted from a mobile terminal (mobile station) such as a PHS (personal handyphone system) terminal and a portable telephone terminal, which is connected to a terminal equipment such as a personal computer, to a base station (BS), then transmitted through the base station, a base-station control station (MSC: mobile switching center) and a packet gateway etc. to a packet communications network such as the Internet and LAN.

Meanwhile, the packet (data) communications have a stronger burst in data stream than speech communications. So, when the data transfer is allowed at a high transfer rate, there occurs an abrupt change in data transfer rate. Namely, the data stream abruptly changes in quantity and with time.

Also, in CDMA communication system, the ratio of the amount of interference and the amount of signal in communication or the frame error rate is observed. Thereby, a new communication is permitted (channel assign) or the control of transmission power is conducted.

However, when the data stream abruptly changes in quantity and with time like the packet communications, the control may be difficult to conduct sequentially based on a value measured by the base station.

When all terminal equipments (TE) use self-declared maximum bandwidths, the radio section falls into congestion so that they become impossible of normal communications. This is because it is estimated that a probability that all channels are simultaneously used for data communications at the maximum bandwidths is very low. It is applicable to a case that the number of channels is large to some extent.

However, when a large amount of data transfer is conducted in a short time (with a short suspense time than that in speech communications) like the packet communications, a probability that there occurs a phenomenon that a large amount of data transfer is simultaneously conducted by multiple terminal equipments (TE) becomes high.

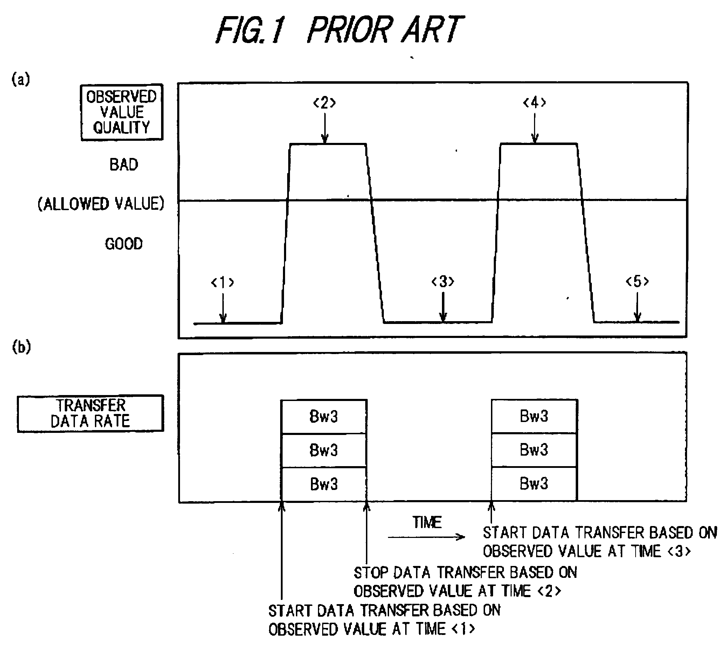

FIG.1 is a schematic diagram showing a conventional example of control of data transfer rate. In FIG.1, (a) is the quality of signal observed at the base station and (b) is the data transfer band of three mobile terminals 1, 2 and 3. Explaining the worst case, when none of terminal equipments is used for the communications (time 〈1〉 in FIG.1), an acceptable amount of data transfer measured at the base station side takes a large value. Therefore, all the terminal equipments connected to the mobile terminals 1, 2 and 3 assume that they are allowed to communicate at the respective maximum bandwidths (BW1, BW2, BW3), and then start to transmit data (time 〈2〉 in FIG.1). As a result, the amount of interference measured at the base station side increases, and the quality of communications measured at the base station deteriorates. Thus, they become impossible of normal communications.

Therefore, all the terminal equipments (TE) lose the next chance to communicate, waiting for communication. As a result, the measured value at the base station to manage the terminal equipment comes into a good state again (time 〈3〉 in FIG.1). Also, all the terminal equipments (TE) start to communicate (time 〈4〉 in FIG.1).

Accordingly, as shown in FIG.1, repeated are the start of data communication at the maximum bandwidth of all the terminal equipments, the transition to good quality of communications due to the deterioration in quality of communications and the wait state for communication, and the next start of data communication at the maximum bandwidth of all the terminal equipments.

For example, the terminal equipments TE1, TE2 and TE3 connected to the three mobile terminals are allowed to have a maximum transfer rate of 2048 kbps, and the base station to manage the three mobile terminals is a system capable of allowing a transfer rate of up to 4096 kbps.

In this case, if the three terminal equipments TE1, TE2 and TE3 simultaneously start to transfer data, then signal corresponding to 6144 kbps is input to the base station. Namely, it exceeds the acceptable value drastically. Therefore, the base station cannot receive signal normally.

Thus, there occurs a vicious cycle that the data transfer, interference and intermission are repeated. As a result, the amount of data transmittable lowers. Further, as the case may be, there occurs even a case that the data transfer itself becomes impossible to conduct.

To avoid such a vicious cycle, the control of data transfer is required. In this regard, it is desirable that the control service is conducted evenly without stopping the data transfer in part of the terminal equipments (TE).

### SUMMARY OF THE INVENTION

Accordingly, it is an object of the invention to provide a data transfer control system that, even when multiple mobile terminals simultaneously start the data transfer, the data transfer can be conducted smoothly while avoiding a congestion.

According to the invention, provided is a data transfer control system in mobile data communications system, wherein
when the data transfer from a mobile terminal to a base station system starts, the transfer rate is controlled to increase sequentially from a low transfer rate to be set initially.

According to another aspect of the invention, a mobile data communications system with a channel structure where the rate of data transfer can be varied, comprises:
a mobile terminal which is connected to a terminal equipment and whose transfer rate is controlled to increase sequentially from a low transfer rate to be set initially when the data transfer from the terminal equipment to a base station system starts; and
the base station system for sending control information for controlling the transfer rate of the mobile terminal to the mobile terminal based on the quality of receive signal.

In this invention, for the communications system with a channel structure where the rate of data transfer can be varied, when the data transfer from a mobile terminal in a channel starts, the transfer rate is controlled to be set based on the quality of receive signal at its base station system.

To transmit at a high transfer rate means to transmit at high transmission power. Thereby, the amount of interference in another channel increases. If a large variation in the amount of interference occurs in a short time, the cycle of observation and control does not function effectively, therefore the effective rate of data transfer will lower.

So, in this invention, the rate of data transfer at the terminal equipment and mobile terminal is set based on the observed value of the amount of interference on the base station system side.

In this invention, the mobile terminal is controlled to start the data transfer from the terminal equipment to the base station system at a low transfer rate, and the base station system sends control information for controlling the transfer rate to the mobile terminal based on the quality of receive signal.

The mobile terminal sets the initial transfer rate at the time when the data transfer starts, based on the control information from the base station system.

### BRIEF DESCRIPTION OF THE DRAWINGS

The invention will be explained in more detail in conjunction with the appended drawings, wherein:
FIG.1 is a schematic diagram showing the conventional example of control of data transfer rate;
FIG.2 is a schematic diagram showing the overall composition of a mobile communications system in a preferred embodiment of the invention;
FIG.3 is a block diagram showing the composition of a mobile terminal (MT) and base station system (BSS) in a preferred embodiment of the invention;
FIG. 4 is a diagram showing an example of upstream control sequence of data transfer in a preferred embodiment of the invention;
FIG.5 is graphs showing a time shift in data transfer control in a first preferred embodiment of the invention; and
FIG.6 is graphs showing a time shift in data transfer control in a second preferred embodiment of the invention.

### DESCRIPTION OF THE PREFERRED EMBODIMENTS

In the preferred embodiment of the invention, a base station is provided with means for measuring the amount of interference in receive signal and means for transmitting control information for controlling the transfer rate to a mobile terminal based on the measured amount of interference. The means for measuring the amount of interference in receive signal measures the ratio of the received power and interference power per one bit of receive signal.

Further, the base station is provided with means for, based on the measured amount of interference, notifying a mobile terminal to start the data transfer newly of an initial transfer rate or the disapproval of starting the transfer, and for transmitting control information about which transfer rate is set to a mobile terminal that is currently conducting the data transfer. The mobile terminal receiving the control information from the base station, based on the control information, sets the transfer rate of data and instructs the flow control of a terminal equipment connected to the mobile terminal. Thereby, the data transfer is conducted at the transfer rate by that setting.

Next, the preferred embodiments of the invention will be explained in detail, referring to the drawings.

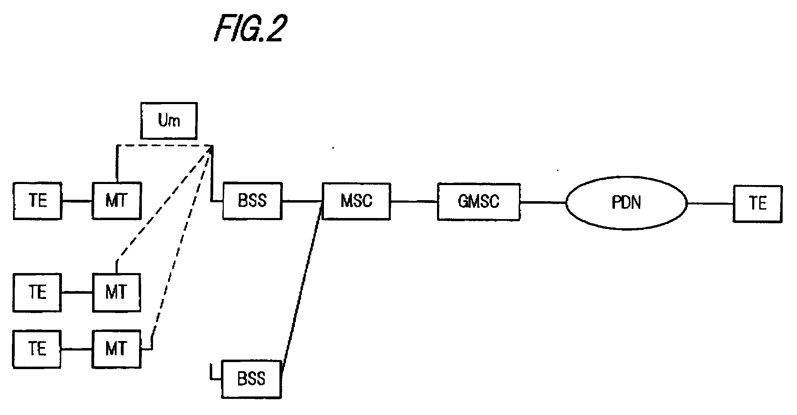

FIG.2 is a schematic diagram showing the overall composition of a mobile communications system in the preferred embodiment of the invention. In FIG.2, the mobile communications system is composed of terminal equipments (TE), mobile terminals (MT) connected to the terminal equipments, base station systems (BSS), a mobile switching center (MSC), and a gateway MSC (GMSC). Um is a radio interface, and PDN is a packet data network. Meanwhile, when data is transmitted from a terminal equipment such as a personal computer, a packet output from the terminal equipment is sent to the gateway MSC (GMSC). Also, for a receive packet, the gateway MSC (GMSC) selects a base station using a terminal position management function (location register) etc. based on the internal address according to the IP address etc. Thereby, the packet is sent to a mobile terminal, then forwarded from the mobile terminal to the terminal equipment.

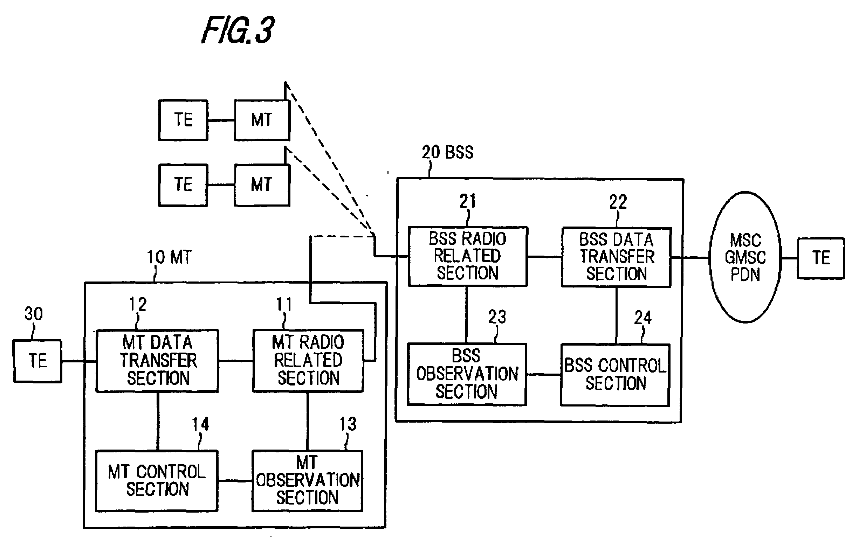

FIG.3 is a block diagram showing the composition of a mobile terminal (MT) and base station system (BSS) in the preferred embodiment of the invention. The mobile terminal (MT) 10 is composed of a MT radio related section 11 which conducts the radio communication with a base station system 20, a MT data transfer section 12 which conducts the data transfer to and from a terminal equipment 30, a MT observation section 13, and a MT control section 14. The base station system (BSS) 20 is composed of a BSS radio related section 21 which conducts the radio communication with the mobile terminal (MT) 10, a BSS data transfer section 22 which conducts the data transfer between the BSS radio related section 21 and the mobile switching center (MSC) etc., a BSS observation section 23 which observes the quality of receive signal, and a BSS control section 24.

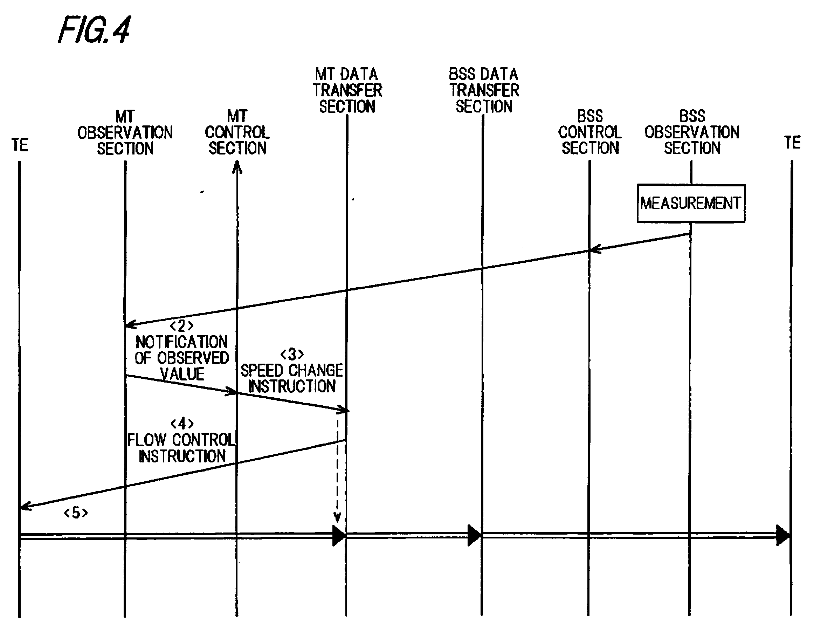

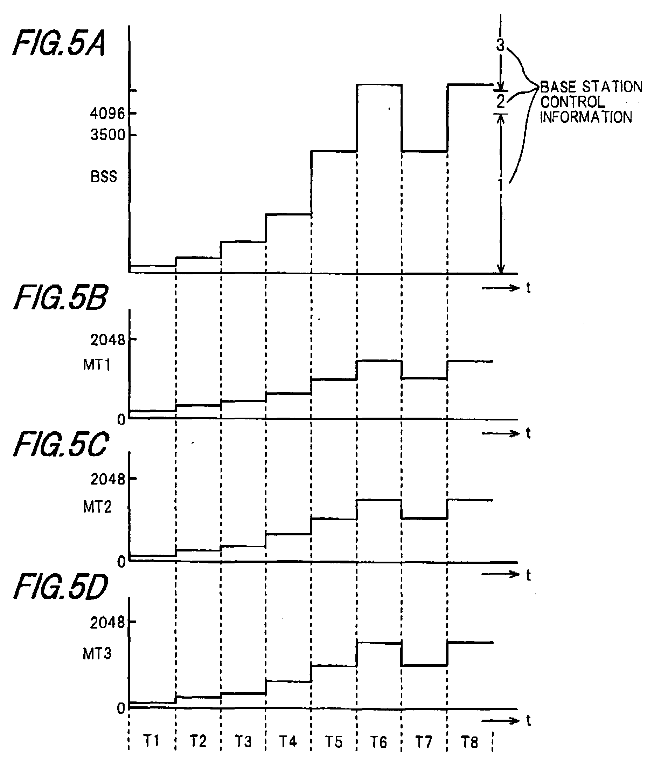

FIG.4 is a diagram showing an example of upstream control sequence, from the mobile terminal (MT) to the base station system (BSS), in the preferred embodiment of the invention. FIG.5 is graphs showing an example of time shift in data transfer control in the preferred embodiment of the invention.

Referring to FIGS.2 to 4, the operation in the embodiment of the invention will be explained below.

The BSS observation section 23 of the base station system (BSS) 20 measures the ratio (Eb/Io) of received power and interference power per one bit of signal, thereby monitoring whether the base station system (BSS) 20 can accept data. A large value of Eb/Io indicates that the quality of signal is high, and a small value of Eb/Io indicates that the quality of signal is low.

The base station system (BSS) 20 sends a measured value (observed value), as control information, corresponding to Eb/Io from the BSS radio related section 21 to a necessary mobile terminal (MT) 10 (〈1〉 broadcast of observed value in FIG.4).

In the mobile terminal (MT) 10, the MT observation section 13 receives the control information (observed value), and informs the MT control section 14 of the control information (〈2〉 in FIG.4). Receiving the information, the MT control section 14 instructs the MT data transfer section 12 about the change of transfer rate etc. (〈3〉 in FIG.4), and instructs the terminal equipment 30 about the flow control according to the concerned rate of data transfer (〈4〉 in FIG.4). Thereby the data transfer is conducted at a transfer rate by setting (〈5〉 in FIG.4).

An example of the instruction of transfer rate to the MT data transfer section 12 is as shown in Table 1 below.

**Table 1**

| | |
|---|---|
| Rate 1 | 64 kbps |
| Rate 2 | 128 kbps |
| Rate 3 | 256 kbps |
| Rate 4 | 512 kbps |
| Rate 5 | 1024 kbps |
| Rate 6 | 1536 kbps |
| Rate 7 | 2048 kbps (maximum rate) |

It is assumed that the base station system (BSS) 20 can process Eb/Io corresponding to 4096 kbps at the maximum. Also, it is assumed that, in the system, the reception at the base station system (BSS) 20 is controlled to be between 3500 kbps and 4096 kbps.

The base station system (BSS) 20, as shown in Table 2 below, sends control information (controls 1 to 3) to the mobile terminal according to the quality of receive signal.

**Table 2**

| Control info. | Control conditions | Control contents |
|---|---|---|
| Control 1 | The quality of receive signal at the base station system corresponds to lower than 3500 kbps. | A mobile terminal not conducting the data transfer so far is allowed to start at data transfer rate [1]. A mobile terminal conducting the data transfer is allowed to change the rate [N] into rate [N+1]. |
| Control 2 | The quality of receive signal at the base station system corresponds between 3500 kbps and 4096 kbps. | A new data transfer is not allowed to start. A mobile terminal communicating currently is to maintain the status. |
| Control 3 | The quality of receive signal at the base station system corresponds to higher than 4096 kbps. | A new data transfer is not allowed to start. A mobile terminal communicating currently is to change the data transfer rate [N] into [N-1]. The mobile terminal at rate [1] intermits the data transfer. |

The explanation below is given assuming that, as shown in FIG.5, control 1 in Table 2 is output as control information from the base station system.

It is assumed that multiple mobile terminals MT1, MT2 and MT3 simultaneously start the data transfer at time (time step) T1. The mobile terminals first start the data transfer at data transfer rate [1] (64 kbps), and therefore the base station system conducts the reception of 192 kbps.

Since the base station system can still accept data sufficiently, it makes the control information keep control 1.

The mobile terminals MT1, MT2 and MT3 increase the rate in the order of transfer rate [2] (128 kbps) at time T2, transfer rate [3] (256 kbps) at time T3, transfer rate [4] (512 kbps) at time T4, and transfer rate [5] (1024 kbps) at time T5.

All the mobile terminals MT1, MT2 and MT3 have transfer rate [6] (1536 kbps) at time T6. As a result, the base station system is subject to reception of 4608 kbps, which exceeds 4096 kbps. Therefore, it switches the control information into control 3 in Table 2, thereby controlling the data transfer of the mobile terminals to lower.

Receiving the control information from the base station system, the mobile terminals MT1, MT2 and MT3 lowers the rate to transfer rate [5] (1024 kbps), thereby the reception is less than the rated value (4096 kbps).

Then, at time T7, the base station system switches the control information into control 1. Receiving this, the mobile terminals MT1, MT2 and MT3 increases the rate to transfer rate [6] (1536).

The base station system is subject to reception of 4608 kbps, which exceeds 4096 kbps. Therefore, it switches the control information into control 3 in Table 2, thereby controlling the data transfer of the mobile terminals to lower.

By repeating the control of transfer rate, the communication can be conducted substantially at the middle rate of 1024 kbps and 1536 kbps.

The operation of data transfer control in the second preferred embodiment of the invention will be explained below. In this embodiment, the base station system controls data transfer more finely, so that the data transfer rate of mobile terminals can be stabilized more quickly.

An example of control information of the base station system is shown in Table 3.

**Table 3**

| Control info. | Control conditions | Control contents |
|---|---|---|
| Control 11 | The quality of receive signal at the base station system corresponds to between 3968 kbps and 4032 kbps. | A mobile terminal not conducting the data transfer so far is allowed to start at data transfer rate [1]. A mobile terminal conducting the data transfer is allowed to increase by a corresponding value to the transfer rate [1]. |
| Control 12 | The quality of receive signal at the base station system corresponds to between 3840 kbps and 3968 kbps. | A mobile terminal not conducting the data transfer so far is allowed to start at data transfer rate [2]. A mobile terminal conducting the data transfer is allowed to increase by a corresponding value to the transfer rate [2]. |
| Control 13 | The quality of receive signal at the base station system corresponds to between 3584 kbps and 3840 kbps. | A mobile terminal not conducting the data transfer so far is allowed to start at data transfer rate [3]. A mobile terminal conducting the data transfer is allowed to increase by a corresponding value to the transfer rate [3]. |
| Control 14 | The quality of receive signal at the base station system corresponds to between 0 kbps and 3584 kbps. | A mobile terminal not conducting the data transfer so far is allowed to start at data transfer rate [4]. A mobile terminal conducting the data transfer is allowed to increase by a corresponding value to the transfer rate [4]. |
| Control 2 | The quality of receive signal at the base station system corresponds to between 4032 kbps and 4096 kbps. | A new data transfer is not allowed to start. A mobile terminal communicating currently is to maintain the status. |
| Control 3 | The quality of receive signal at the base station system corresponds to higher than 4096 kbps. | A new data transfer is not allowed to start. A mobile terminal communicating currently is to change the data transfer rate [N] into [N-1]. The mobile terminal at rate [1] intermits the data transfer. |

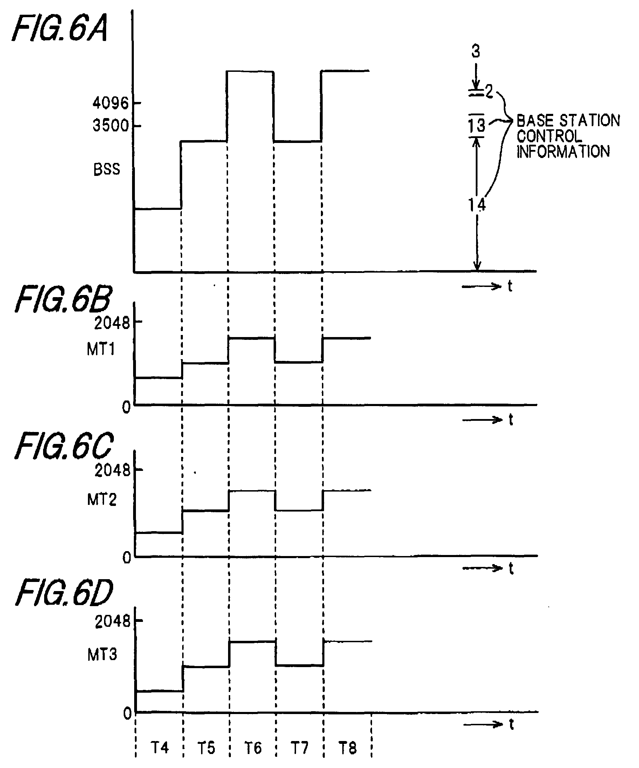

Referring to FIG.6, the second embodiment of the invention is explained. The explanation below is given assuming that control information 14 in Table 3 is output from the base station system.

It is assumed that the mobile terminals MT1, MT2 and MT3 simultaneously start the data transfer at time (time step) T1.

The mobile terminals MT1, MT2 and MT3 first start the data transfer at data transfer rate [4] (512 kbps), and therefore the base station system conducts the reception of 1536 kbps.

Since the base station system can still accept data sufficiently, it makes the control information keep control 14 in Table 3.

The mobile terminals MT1, MT2 and MT3 increase the rate to transfer rate [5] (1024 kbps) at time T2.

When the mobile terminals MT1, MT2 and MT3 have transfer rate [6] (1536 kbps) at time T3, the base station system is subject to reception of 4608 kbps, which exceeds 4096 kbps. Therefore, it switches the control information into control 3, thereby controlling the data transfer of the mobile terminals to lower.

Thus, in the second embodiment of the invention, the time taken until the rate stabilizes can be less than that in the first embodiment.

### Advantages of the Invention:

In this invention, the data transfer rate is controlled to increase sequentially from a low transfer rate, not a rate originally allowed to the mobile terminal, and when the rate exceeds the reception band of base station system, the transfer rate is controlled to reduce. Thereby, even when multiple mobile terminals simultaneously start the data transfer, the data transfer can be conducted smoothly.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

## Claims

1. A data transfer control system in mobile data communications system, wherein
when the data transfer from a mobile terminal to a base station system starts, the transfer rate is controlled to increase sequentially from a low transfer rate to be set initially.

2. A data transfer control system, according to claim 1, wherein:
the transfer rate at said mobile terminal is controlled to be set based on the quality of receive signal at said base station system.

3. A data transfer control system, according to claim 1, wherein:
the initial transfer rate at the time when said mobile terminal starts the data transfer is set based on control information from said base station system, and when said mobile terminal is conducting the data transfer, the rate of data transfer is controlled to vary based on the control information from said base station system.

4. A data transfer control system, according to claim 1, wherein:
said base station system sends the control information for controlling the transfer rate to said mobile terminal according to the amount of interference in receive signal.

5. A data transfer control system, according to claim 1, wherein:
according to the amount of interference in receive signal, said base station system notifies a mobile terminal to start the data transfer newly of an initial transfer rate or the disapproval of starting the transfer, and sends the control information about which transfer rate is set to a mobile terminal that is currently conducting the data transfer.

6. A data transfer control system, according to claim 4, wherein:
said base station system measures the ratio of the received power and interference power per one bit of receive signal, and sends the control information for controlling the transfer rate to said mobile terminal according to the measured value.

7. A data transfer control system, according to claim 5, wherein:
said base station system measures the ratio of the received power and interference power per one bit of receive signal, and sends the control information for controlling the transfer rate to said mobile terminal according to the measured value.

8. A data transfer control system, according to claim 1, wherein:
said mobile terminal radio-communicate with said base station system by using a CDMA communications system.

9. A mobile data communications system with a channel structure where the rate of data transfer can be varied, comprising:
a mobile terminal which is connected to a terminal equipment and whose transfer rate is controlled to increase sequentially from a low transfer rate to be set initially when the data transfer from said terminal equipment to a base station system starts; and
said base station system for sending control information for controlling the transfer rate of said mobile terminal to said mobile terminal based on the quality of receive signal.

10. A mobile data communications system, according to claim 9, wherein:
said mobile terminal is composed of means for setting the initial transfer rate at the time when said mobile terminal starts the data transfer based on control information from said base station system, and for varying the rate of data transfer based on the control information from said base station system when said mobile terminal is conducting the data transfer.

11. A mobile data communications system, according to claim 9, wherein:
said base station system is composed of means for measuring the amount of interference in receive signal, and means for sending the control information for controlling the transfer rate of said mobile terminal to said mobile terminal according to the measured amount of interference.

12. A mobile data communications system, according to claim 9, wherein:
said base station system is composed of means for measuring the amount of interference in receive signal, and means for, according to the amount of interference in receive signal, notifying a mobile terminal to start the data transfer newly of an initial transfer rate or the disapproval of starting the transfer and for sending the control information about which transfer rate is set to a mobile terminal that is currently conducting the data transfer.

13. A mobile data communications system, according to claim 9, wherein:
said mobile terminal receiving the control information from said base station system sets the rate of data transfer and instructs the flow control to the terminal equipment connected, based on the control information.

14. A mobile data communications system, according to claim 9, wherein:
said base station system measures the ratio of the received power and interference power per one bit of receive signal, and sends the control information for controlling the transfer rate to said mobile terminal according to the measured value.

15. A mobile data communications system, according to claim 9, wherein:
said mobile terminal radio-communicate with said base station system by using a CDMA communications system.
